# EUROPEAN PATENT SPECIFICATION

(11) **EP 1 534 425 B1**
(45) Date of publication and mention of the grant of the patent: **03.01.2007**
(21) Application number: 03792275.4
(22) Date of filing: 06.08.2003
(51) Int. Cl.: B01J 23/745, C07C 1/04, C10G 2/00

(54) **FISCHER-TROPSCH PROCESS USING AN IRON-CONTAINING LAYERED MATERIAL**
FISCHER-TROPSCH-VERFAHREN UNTER VERWENDUNG EINES EISENHALTIGEN SCHICHTFÖRMIGEN MATERIALES
PROCEDE FISCHER-TROPSCH UTILISANT UN MATERIAU EN COUCHES CONTENANT DU FER

(30) Priority: 09.08.2002 US 402379 P; 24.10.2002 EP 02079413
(43) Date of publication of application: 01.06.2005
(73) Proprietor: Albemarle Netherlands B.V., 3818 LE Amersfoort (NL)
(72) Inventor: STAMIRES, Dennis, Newport Beach, CA 92660 (US); SPEE, Marieke, Paulyne, Rénate, NL-3524 AS Utrecht (NL); LAHEIJ, Erik, Jeroen, NL-1181 SW Amstelveen (NL); O'CONNOR, Paul, NL-3871 KM Hoevelaken (NL)
(74) Representative: Rasser, Jacobus Cornelis
(86) International application number: PCT/EP2003/008770
(87) International publication number: WO 2004/018094

(56) References cited:
- WO-A-02/089978
- US-A- 2 850 515
- US-A- 4 559 363
- US-A- 4 665 044
- US-A- 4 920 086
- SHEN J, GUANG B, TU M, CHEN Y: "Pepraration and characterization of Fe/MgO catalysts obtained from hydrotalcite-like compounds" CATALYSIS TODAY, vol. 30, 1996, page 77-82 XP002265886 cited in the application
- TU M, SHEN J, CHEN Y: "Microcalorimetric studies of surface acid/base properties of magnesium-iron catalysts prepared from hydrotalcite-type precursors" JOURNAL OF SOLID STATE CHEMISTRY, vol. 128, 1997, page 73-79 XP002265887 cited in the application
- HEREIN D ET AL: "On the nature of the so-called iron-graphite" CARBON, ELSEVIER SCIENCE PUBLISHING, NEW YORK, NY, US, vol. 35, no. 1, 1997, pages 17-29, XP004016637 ISSN: 0008-6223

## Description

The present invention relates to a Fischer-Tropsch process using an iron-containing layered material.

As explained by M.E. Dry in *Catal. Lett.,* Vol. 7 (1990) 241-252, the most suitable catalytic metals for Fisher Tropsch synthesis, i.e. the production of hydrocarbons from CO and H₂, are Fe, Co, and Ru. Of these metals, iron is the least expensive and has the highest selectivity to olefins.

In order to reach a satisfactory selectivity, iron-containing catalysts require a certain level of basicity. This basicity is usually created by the addition of alkali. Unfortunately, alkali is known to migrate over the catalyst surface, enhancing iron sintering. Furthermore, alkali enhances carbon lay-down on the catalyst, leading to deactivation of the catalyst.

Apart from carbon lay-down, also sulphur poisoning might cause deactivation. Furthermore, as a result of diffusion resistance inside the iron particles, the water vapour pressures inside these particles can be relatively high, leading to sintering and/or oxidation of the inner core of the iron particles.

Shen et al. disclose the use of calcined and subsequently reduced Mg-Fe anionic clay (*Catal. Today* 30 (1996) 77-82 / *J. Solid State Chem.* 128 (1997) 73-79) and Ni-Fe anionic clay (*Thermochimica Acta* 302 (1997)) in a Fischer-Tropsch process.

The present invention provides a method for performing a Fischer-Tropsch process using iron-containing layered materials which is simpler than the method of Shen. It involves fewer reaction steps and/or uses a catalyst that is easier to prepare.

The method according to the invention comprises the steps of:
a) selecting a Fischer-Tropsch catalyst precursor,
b) reducing the Fischer-Tropsch catalyst precursor to form a Fischer-Tropsch catalyst, and
c) performing a Fischer-Tropsch synthesis using the Fischer-Tropsch catalyst precursor according to step a) or the Fischer-Tropsch catalyst according to step b),
wherein the Fischer-Tropsch catalyst precursor comprises an iron-containing layered material which iron is present in the layered structure as trivalent metal.

The term "layered material" includes anionic clays.

Iron-containing layered materials include layered materials in which iron is the trivalent metal or at least one of the trivalent metals present in the layered structure. It also includes layered materials in which iron is present as both divalent and trivalent metal.

It has now been found, in contrast to the teaching of Shen et al., that iron-containing layered materials do not have to be calcined prior to use in Fischer-Tropsch synthesis, but that they can be used directly, optionally after a reduction step. The absence of a calcination step makes the process simpler and economically more attractive.

Iron-doped layered materials generally comprise 1-35 wt%, preferably 5-20 wt%, more preferably 10 - 15 wt% of iron, calculated as Fe₂O₃ and based on the weight of the iron-doped layered material.

### Anionic clays

Anionic clays have a crystal structure consisting of positively charged layers built up of specific combinations of divalent and trivalent metal hydroxides between which there are anions and water molecules. Hydrotalcite is an example of a naturally occurring anionic clay in which the trivalent metal is aluminium, the divalent metal is magnesium, and the predominant anion is carbonate; meixnerite is an anionic clay in which the trivalent metal is aluminium, the divalent metal is magnesium, and the predominant anion is hydroxyl.

It should be noted that a variety of terms are used to describe the material that is referred to in this specification as an anionic clay. Hydrotalcite-like and layered double hydroxide are interchangeably used by those skilled in the art. In this specification we refer to these materials as anionic clays, comprising within that term hydrotalcite-like and layered double hydroxide materials.

Anionic clays in which iron is the trivalent metal or at least one of the trivalent metals present in the anionic clay structure (according to group 1b) include Fe³⁺-Mg²⁺ anionic clay, Fe³⁺-Mn²⁺ anionic clay, Fe³⁺-Ca²⁺ anionic clay, Fe³⁺-Ba²⁺ anionic clay, Fe³⁺-Zn²⁺ anionic clay, Fe³⁺-Co²⁺ anionic clay, Fe³⁺-Mo²⁺ anionic clay, Fe³⁺-Ni²⁺ anionic clay, Fe³⁺-Sr²⁺ anionic clay, Fe³⁺-Cu²⁺ anionic clay, Fe³⁺-Zn²⁺Cu²⁺, Fe³⁺Al³⁺-Zn²⁺Cu²⁺, Fe³⁺-Ni²⁺Cu²⁺ anionic clay, Al³⁺Fe³⁺-Mg²⁺ anionic clay, Al³⁺Fe³⁺-Zn²⁺ anionic clay, and Ru-doped Fe³⁺-Zn²⁺ anionic clay.

Examples of anionic clays include Fe³⁺-Fe²⁺ anionic clay, Fe³⁺-Fe²⁺Mg²⁺ anionic clay, Fe³⁺-Fe²⁺Cu²⁺ anionic clay, Fe³⁺-Fe²⁺Co²⁺ anionic clay, Fe³⁺-Fe²⁺Zn²⁺ anionic clay, Al³⁺Fe³⁺-Fe²⁺Cu²⁺ anionic clay, Al³⁺Fe³⁺-Fe²⁺Co²⁺ anionic clay, Al³⁺Fe³⁺-Fe²⁺Zn²⁺ anionic clay, Fe³⁺-Fe²⁺Cu²⁺Zn²⁺ anionic clay, Al³⁺Fe³⁺-Fe²⁺Cu²⁺Zn²⁺ anionic clay.

### Preparation of anionic clays

lron-containing anionic clays can be prepared by any method known in the art. For instance, co-precipitation of a water-soluble iron(III) salt and a water-soluble divalent metal salt (e.g. magnesium nitrate) will result-after aging - in the formation of an iron-containing anionic clay according to the present invention. Aging of a slurry comprising a trivalent iron compound and a divalent metal compound, at least one of them being water-insoluble, will result in an iron-containing anionic clay according to the present invention.

If in the above methods for the preparation of iron-containing anionic clays an excess of divalent and/or trivalent metal source is used, compositions of iron-containing anionic clay and unreacted (meaning: not reacted to anionic clay) divalent and/or trivalent metal source - e.g. brucite, MgO, boehmite, iron (hydr)oxide and/or zinc (hydr)oxide - may be formed.

The iron-containing anionic clays can be thermally treated to form a solid solution, followed by rehydration to form an anionic clay again. This results in an increase in the physical strength of the particles.

lron-containing anionic clays may be subjected to ion-exchange. Upon ion-exchange the interlayer charge-balancing anions are replaced with other anions. Examples of suitable anions are carbonate, bicarbonate, nitrate, chloride, sulphate, bisulphate, vanadates, tungstates, borates, phosphates, pillaring anions such as HVO₄⁻, V₂O₇⁴⁻, HV₂O₁₂⁴⁻, V₃O₉³⁻, V₁₀O₂₈⁶⁻, Mo₇O₂₄⁶⁻, PW₁₂O₄₀³⁻, B(OH)₄⁻, B₄O₅(OH)₄²⁻, [B₃O₃(OH)₄]⁻, [B₃O₃(OH)₅]²⁻ HBO₄²⁻, HGaO₃²⁻, CrO₄²⁻, and Keggin-ions, formate, acetate, and mixtures thereof.

Such an ion-exchange may also be applied to anionic clays before they are impregnated with iron-containing compound to form an iron-doped anionic clay according to group 2.

### Catalyst compositions

The Fischer-Tropsch catalyst precursor used in the process according to the invention can consist solely of one or more iron-containing layered material(s). However, it can be advantageous to have other catalyst components present, such as iron-free anionic clays, e.g. Al-Mg anionic clay, magnesium (hydr)oxide, iron hydroxide, e.g. Fe(OH)₃ or FeOOH, iron oxide, alumina, titania, silica, and/or zinc (hydr)oxide.

Furthermore, it is possible to add additives to the Fischer-Tropsch catalyst precursor, either by having one or more additives present during preparation of the iron-containing layered material, or by impregnating the iron-containing layered material with one or more additives. Suitable additives are compounds of rare earth metals (e.g. Ce, La), Si, P, B, group VI metals, group VIII noble metals (Pt, Pd), alkaline earth (for instance Ca, Mg, and Ba), alkaline metals (e.g. K) and/or transition metals (for example Mn, Ti, Zr, Cu, Ru, Co, Ni, Zn, Mo, V, W, Sn, Cr, Re, Rh).

### The Fischer-Tropsch synthesis

Before use in the Fischer-Tropsch synthesis, the Fischer-Tropsch catalyst precursor may be reduced - according to step b) of the method according to the invention - to form the Fischer-Tropsch catalyst. This reduction can be performed either *in situ* or *ex situ* and preferably in a hydrogen-containing atmosphere at temperatures in the range 200-600°C.
If no reduction step is performed, the final Fischer-Tropsch catalyst will be formed from the Fischer-Tropsch catalyst precursor during Fischer-Tropsch synthesis.

The Fischer-Tropsch synthesis - according to step c) of the method according to the invention - can be conducted in any manner known in the art for performing this reaction over iron-containing catalysts. Typically, it is conducted at temperatures between 200 and 400°C and pressures between about 1 and 70 atm, preferably 1-30 atm, in a slurry reactor, a fixed bed reactor, or a fluidized bed reactor. Typical H₂/CO ratios range from 0.5 to 6.0, more preferably 0.5-2.0.

### EXAMPLES

### Example 1

An aqueous solution of Fe(NO₃)₃ (0.25 mol) in de-ionized water was added slowly to a suspension of MgO (0.53 mol) and Mg(OH)ₓ(CO₃)y (0.23 mol) in de-ionized water. The reaction mixture was brought to pH=9.5 and subsequently stirred at 80°C for 16 hours. The precipitate was isolated by filtration, washed with de-ionized water, and dried at 85°C. XRD and chemical analysis revealed the quantitative formation of a Fe³⁺-Mg²⁺ anionic clay.

### Example 2

A suspension of Fe(OH)₃ (0.25 mol) in de-ionized water was added to a suspension of MgO (0.53 mol) and Mg(OH)ₓ(CO₃)_{y} (0.23 mol) in de-ionized water. The reaction mixture was aged at 80°C for 24 hours under stirring. The precipitate was isolated by filtration and dried at 85°C. XRD and chemical analysis revealed the quantitative formation of a Fe³⁺-Mg²⁺ anionic clay.

### Example 3

A suspension of Fe(OH)₃ (0.25 mol) in de-ionized water was added to a suspension of MgO (0.53 mol) and Mg(OH)ₓ(CO₃)_{y} (0.23 mol) in de-ionized water. The reaction mixture was aged at 140°C under hydrothermal conditions for 24 hours under stirring. The precipitate was isolated by filtration and dried at 85°C. XRD revealed the formation of a Fe³⁺-Mg²⁺ anionic clay.

### Example 4

An aqueous solution of Fe(NO₃)₃·9H₂O (1 mol) and Zn(NO₃)₂·6H₂O (3 mol) was added slowly to an aqueous solution of (NH₄)₂CO₃. The pH of the solution was kept at 7 by introducing NaOH. The precipitate was aged for 1 hour at room temperature and subsequently isolated, washed with de-ionized water, and dried at 120°C. XRD and chemical analysis revealed the quantitative formation of a Fe³⁺-Zn²⁺ anionic clay.

### Example 5

An aqueous solution of Fe(NO₃)₃·9H₂O (1 mol) and Co(NO₃)₂·6H₂O (3 mol) was added slowly to an aqueous solution of Na₂CO₃ at 65 °C. The pH of the solution was kept at 10 by introducing NaOH. The precipitate was aged for 1 hour at 65°C and subsequently isolated, washed with de-ionized water, and dried at 120°C. XRD and chemical analysis revealed the quantitative formation of a Fe³⁺-Co²⁺ anionic clay.

### Example 6

The iron-containing anionic clays according to Examples 1-5 were tested for their Fischer-Tropsch activity, selectivity, and stability in a fixed bed reactor at atmospheric pressure using two different tests.
For comparison, the same tests were applied to two types of reference materials: (i) "state of the art" iron oxide catalysts (prepared by a precipitation reaction between iron salts and a base) and (ii) a mixed metal oxide containing both magnesium oxide and iron oxide (atomic ratio Mg:Fe = 3:1) prepared by co-precipitation of a mixture of magnesium salts and iron salts with a base.

The first test involved pulse-testing of an accurately defined amount of CO in a flow of H₂ during a well-defined time-span, applying the apparatus described in International Patent Application No. WO 01/79835, page 7, line 24 through page 8, line 3 for pulse-chemisorption.
A catalyst sample (200 mg) was first reduced under flowing H₂ (total flow 20 mL/min) while increasing the temperature from room temperature to 400°C with a ramp of 10°C/min. The sample was subsequently kept at 400°C for 4 hours under H₂-flow (total flow 20mL/min). Next, the sample was allowed to cool down to room temperature while flowing He. CO pulse-testing was performed at room temperature and measured with a TCD (total flow He=16 mL/min, 8 µL CO per pulse). Then, the samples were treated by flowing H₂ (total flow 20 mL/min) and increasing the temperature from room temperature to 400°C with a ramp of 10°C/min. The samples were kept at 400°C for 30 minutes under flowing H₂ (total flow 20 mL/min) and subsequently allowed to cool down to 250°C in H₂-atmosphere. The Fischer-Tropsch activity was measured by measuring the response of small CO pulses in a H₂-flow (total H₂ flow =20 mL/min, 8 µL CO per pulse) at 250°C using a FID. After stripping the surface of the samples with H₂, this activity test was repeated.

The second test was conducted in a micro-flow apparatus. The samples were diluted with SiC, placed the reactor tube, and pre-treated in a mixture of 10 vol.% H₂ in He (total flow 100 mL/min) at a temperature increasing from room temperature to 400°C at a rate of 1 °C/min. This temperature was maintained for 9 hours. Prior to the start of the reaction the samples were cooled to 300°C. The reactor feed consisted of a flow of 30 mL/min of a mixture of H₂ and CO (H₂/CO ratio = 2). The hydrocarbons in the effluent were measured online by a GC-17 Shimadzu gas chromatograph (Al₂O₃/KCl), while CO and CO₂ were measured offline on a Varian gas chromatograph (Poraplot U/Molsieve 5A).

### Activity

The first test showed that the Fischer-Tropsch activity - per gram of iron - of the samples according to Examples 1-5 was a factor 2-6 larger than that of the most active iron oxide reference material. The activity of the mixed oxide reference material was even lower than that of the iron oxide reference materials.
The second test showed that - at 2 hours running time - the Fischer-Tropsch activity - per gram of iron - of the samples according to Examples 1-5 was a factor 10-30 larger than that of the most active iron oxide reference material. The activity of the mixed oxide reference material was even lower than that of the iron oxide reference materials.

### Stability

Furthermore, the activity of the samples according to Examples 1-10 was stable from 1 hour (steady-state) to 6 hours running time, while the activity of the iron oxide reference materials gradually decreased by a factor 2-3 in this time period.

### Selectivity

Except for the sample according to Example 4, all iron-containing anionic clays showed a lower selectivity towards methane than the iron oxide and the mixed oxide reference materials. Furthermore, the selectivity towards methane of the iron oxide reference materials increased by a factor 1.4-1.7 during the test run, while for the iron-containing anionic clays the selectivity towards methane remained constant.

## Claims

1. Method for performing a Fischer-Tropsch process comprising the steps of:
a) selecting a Fischer-Tropsch catalyst precursor;
b) reducing the Fischer-Tropsch catalyst precursor to form a Fischer-Tropsch catalyst; and
c) performing a Fischer-Tropsch synthesis using the Fischer-Tropsch catalyst obtained in step b),
wherein the Fischer-Tropsch catalyst precursor comprises an anionic clay in which iron is present in the layered structure as trivalent metal,
**characterized in that** no calcination step is carried out between step a) and step b).

2. The method of claim 1 wherein step b) is carried out *in situ.*

3. The method of claim 1 wherein step b) is carried out *ex situ.*

4. The method of claim 2 wherein step b) takes place during Fischer-Tropsch synthesis.

5. The method of any one of the preceding claims wherein the anionic clay comprises Mg as a divalent metal.

6. The method of any one of the preceding claims wherein the anionic clay comprises Al as a second trivalent metal.

7. The method of any one of the preceding claims wherein, prior to step b), the Fischer-Tropsch catalyst precursor is subjected to anion-exchange.

8. The method of any one of the preceding claims wherein, prior to step b), the Fischer-Tropsch catalyst precursor is subjected to a thermal treatment to form a solid solution, followed by rehydration to form an anionic clay.

9. The method of any one of the preceding claims wherein the Fischer-Tropsch catalyst precursor comprises unreacted divalent metal source.

10. The method of any one of the preceding claims wherein the Fischer-Tropsch catalyst precursor comprises unreacted trivalent metal source.

## Patentansprüche

1. Verfahren zur Durchführung eines Fischer-Tropsch-Verfahrens, umfassend die folgenden Schritte:
a) Auswählen einer Fischer-Tropsch-Katalysator-Vorstufe;
b) Reduzieren der Fischer-Tropsch-Katalysator-Vorstufe unter Bildung eines Fischer-Tropsch-Katalysators; und
c) Durchführen einer Fischer-Tropsch-Synthese unter Verwendung des in Schritt b) erhaltenen Fischer-Tropsch-Katalysators;
wobei die Fischer-Tropsch-Katalysator-Vorstufe einen anionischen Ton umfasst, bei dem Eisen als dreiwertiges Metall in der Schichtstruktur vorhanden ist;
**dadurch gekennzeichnet, dass** zwischen Schritt a) und Schritt b) kein Calcinierungsschritt durchgeführt wird.

2. Verfahren gemäß Anspruch 1, wobei Schritt b) in situ durchgeführt wird.

3. Verfahren gemäß Anspruch 1, wobei Schritt b) ex situ durchgeführt wird.

4. Verfahren gemäß Anspruch 2, wobei Schritt b) während der Fischer-Tropsch-Synthese stattfindet.

5. Verfahren gemäß einem der vorstehenden Ansprüche, wobei der anionische Ton Mg als zweiwertiges Metall umfasst.

6. Verfahren gemäß einem der vorstehenden Ansprüche, wobei der anionische Ton Al als zweites dreiwertiges Metall umfasst.

7. Verfahren gemäß einem der vorstehenden Ansprüche, wobei die Fischer-Tropsch-Katalysator-Vorstufe vor Schritt b) einem Anionenaustausch unterzogen wird.

8. Verfahren gemäß einem der vorstehenden Ansprüche, wobei die Fischer-Tropsch-Katalysator-Vorstufe vor Schritt b) einer thermischen Behandlung unter Bildung einer festen Lösung und anschließend einer Rehydratisierung unter Bildung eines anionischen Tons unterzogen wird.

9. Verfahren gemäß einem der vorstehenden Ansprüche, wobei die Fischer-Tropsch-Katalysator-Vorstufe nicht umgesetzte Quelle des zweiwertigen Metalls umfasst.

10. Verfahren gemäß einem der vorstehenden Ansprüche, wobei die Fischer-Tropsch-Katalysator-Vorstufe nicht umgesetzte Quelle des dreiwertigen Metalls umfasst.

## Revendications

1. Procédé de mise en oeuvre d'un procédé de Fischer-Tropsch comprenant les étapes consistant à :
a) sélectionner un précurseur catalytique de Fischer-Tropsch ;
b) réduire le précurseur catalytique de Fischer-Tropsch de manière à former un catalyseur Fischer-Tropsch ; et
c) réaliser la synthèse de Fischer-Tropsch en utilisant le catalyseur Fischer-Tropsch obtenu à l'étape b),
**caractérisé en ce que** le précurseur catalytique de Fischer-Tropsch comprend une argile anionique dans laquelle le fer est présent dans la structure en couches comme métal trivalent,
**caractérisé en ce qu'**aucune étape de calcination n'est réalisée entre l'étape a) et l'étape b).

2. Procédé selon la revendication 1, dans lequel l'étape b) est réalisée in situ.

3. Procédé selon la revendication 1, dans lequel l'étape b) est réalisée ex situ.

4. Procédé selon la revendication 2, dans lequel l'étape b) a lieu au cours de la synthèse de Fischer-Tropsch.

5. Procédé selon l'une quelconque des revendications précédentes, dans lequel l'argile anionique comprend du Mg comme métal bivalent.

6. Procédé selon l'une quelconque des revendications précédentes, dans lequel l'argile anionique comprend de l'Al comme second métal trivalent.

7. Procédé selon l'une quelconque des revendications précédentes, dans lequel, avant l'étape b), le précurseur catalytique de Fischer-Tropsch est soumis à un échange d'anions.

8. Procédé selon l'une quelconque des revendications précédentes, dans lequel, avant l'étape b), le précurseur catalytique de Fischer-Tropsch est soumis à un traitement thermique de manière à former une solution solide, suivi d'une réhydratation de manière à former une argile anionique.

9. Procédé selon l'une quelconque des revendications précédentes, dans lequel le précurseur catalytique de Fischer-Tropsch comprend une source métallique bivalente inaltérée.

10. Procédé selon l'une quelconque des revendications précédentes, dans lequel le précurseur catalytique de Fischer-Tropsch comprend une source métallique trivalente inaltérée.
